Europäisches Patentamt

European Patent Office

Office européen des brevets

(11) Veröffentlichungsnummer: **0 396 947**
**A2**

## (12) EUROPÄISCHE PATENTANMELDUNG

(21) Anmeldenummer: **90107520.0**

(22) Anmeldetag: **20.04.90**

(51) Int. Cl.5: **H04M 1/274**

(30) Priorität: **11.05.89 CH 1768/89**

(43) Veröffentlichungstag der Anmeldung:
**14.11.90 Patentblatt 90/46**

(84) Benannte Vertragsstaaten:
**AT DE FR IT**

(71) Anmelder: **ASCOM ZELCOM AG**
**Eichtalstrasse**
**CH-8634 Hombrechtikon(CH)**

(72) Erfinder: **Volker, Goltz**
**Hochstrasse 158**
**CH-8330 Pfäffikon ZH(CH)**

(74) Vertreter: **Dittrich, Horst**
**Zellweger Uster AG Patentabteilung**
**Wilstrasse 11**
**CH-8610 Uster(CH)**

(54) **Verfahren zur Vereinfachung der Benützung von Mensch-Maschinen-Schnittstellen von Komplexen Systemen, insbesondere von Kommunikationsendgeräten.**

(57) Die Kommunikationsendgeräte weisen eine Benutzeroberfläche mit einem Anzeigefeld und einer Tastatur sowie eine entsprechende Infrastruktur mit einer Steuerung und mit Speichern auf. In den letzteren sind verschiedene, bestimmten Funktionen, Grössen oder Objekten entsprechende Codierungen speicherbar, und die als Einträge bezeichneten gespeicherten Codierungen sind aus den Speichern abrufbar. Jeder Eintrag wird mit einem als Häufigkeitsindikator bezeichneten Attribut versehen, mit welchem die Häufigkeit der Benutzung jedes Eintrags registriert wird. Die Einträge werden anhand des Häufigkeitsindikators nach ihrer Benutzungshäufigkeit klassiert und sie werden dem Benutzer auf Wunsch im Anzeigefeld in ihrer klassierten Struktur angegeben.

FIG. 1

## Verfahren zur Vereinfachung der Benützung von Mensch-Maschinen-Schnittstellen von komplexen Systemen, insbesondere von Kommunikationsendgeräten

Die Erfindung betrifft ein Verfahren zur Vereinfachung der Benützung von Mensch-Maschinen-Schnittstellen von komplexen Systemen, insbesondere von Kommunikationsendgeräten, welche eine Benutzeroberfläche mit einem Anzeigefeld und mit mindestens einer Tastatur sowie eine entsprechende Infrastruktur mit einer Steuerung und mit Speichern aufweisen, in welchen verschiedene, bestimmten Funktionen, Grössen oder Objekten entsprechende Codierungen speicherbar und aus welchen die nachfolgend als Einträge bezeichneten gespeicherten Codierungen abrufbar sind.

Wenn ein derartiges Verfahren bei Telefonendgeräten angewendet werden soll, dann bedeutet "Vereinfachung der Benützung" im wesentlichen eine Unterstützung der Wählvorgänge, also beim Aufbau einer abgehenden Verbindung, was üblicherweise durch Eintippen der gewünschten Nummer in die Tastatur des Endgerätes erfolgt. Neben dieser normalen Nummernwahl sind auch verschiedene Arten der Nummernwahl von gespeicherten Nummern ge bräuchlich. Die Nummern stellen dabei jeweils eine Codierung dar und die gespeicherten Nummern bilden im Sinn der eingangs gegebenen Erfindungsdefinition Einträge. Beispiele für diese Wählverfahren sind Wahlwiederholung, Nebenspeicherung (Speicherung einer Nummer für spätere Wiederbenutzung), Kurzwahl (Abspeicherung von Nummern unter einer Kurznummer, durch deren Eingabe die Nummer gewählt wird), Zielwahl und Namenwahl.

Bei der Zielwahl wird eine Anzahl von sogenannten Zieltasten auf der Benutzeroberfläche für den direkten Abruf einer Nummer reserviert. Im Normalfall wird neben den Zieltasten eine Beschriftungsfläche für geeignete Angaben, wie beispielsweise Name und dergleichen, vorgesehen. Die Zieltasten können durch mehrfache Belegung in verschiedenen Ebenen auch zwei oder mehr Nummern unterstützen.

Bei der Namenwahl wird mit der Nummer auch ein Klartext, beispielsweise der Personen- oder Firmenname, im Gerät abgespeichert. Zum Auffinden eines Eintrags wird zumindest der erste Buchstabe des Suchbegriffs eingegeben, worauf im Anzeigefeld der erste Eintrag, auf den der Suchbegriff zutrifft, aufscheint. Alle übrigen zutreffenden Einträge können durch Blättern im Speicher auf die Anzeige ausgegeben werden. Sobald der dem gewünschten Teilnehmer entsprechende Eintrag angezeigt wird, kann dieser übernommen und angewählt werden.

Durch die Erfindung soll nun die Mensch-Maschinen-Schnittstelle auf der Benutzeroberfläche in Richtung auf eine Erhöhung des Bedienungskomforts mit erleichterter und trotzdem sicherer Bedienbarkeit verbessert werden.

Diese Aufgabe wird erfindungsgemäss dadurch gelöst, dass:

a. Jeder Eintrag mit einem nachfolgend als Häufigkeitsindikator bezeichneten Attribut versehen wird, mit welchem die Häufigkeit der Benutzung jedes Eintrags registriert wird; und

b. anhand des Häufigkeitsindikators eine Klassierung der Einträge nach ihrer Benutzungshäufigkeit erfolgt.

Durch den Häufigkeitsindikator können dem Benützer die am häufigsten gewählten Nummern in alphabetisch geordneter Reihenfolge, auf verschiedenen Bildschirmseiten, unmittelbar ausgegeben werden, wodurch der Bedienungskomfort wesentlich erhöht wird.

Nachfolgend wird die Erfindung anhand eines in den Zeichnungen dargestellten Ausführungsbeispiels näher erläutert; es zeigen:

Fig. 1,2 je ein Flussdiagramm zur Erläuterung der Ausgabe der Einträge; und

Fig. 3-8 Darstellungen von ausgegebenen Seiten zur Funktionserläuterung.

Das nachfolgend beschriebene Verfahren zur Bedienung von Kommunikationsendgeräten wird als sogenannte intelligente Zielwahl für Telefonapparate erläutert, kann jedoch allgemein bei Steuerungs- und Ablaufprozeduren, beim Dialog Mensch-Maschine, sowie für die Benutzerunterstützung bei der Bedienung oder beim Gebrauch von Endgeräten angewendet werden. Dabei wird in allen Fällen der Zweck verfolgt, ein komplexes Endgerät für den Benutzer in der Bedienung extrem zu vereinfachen.

Das beschriebene Ausführungsbeispiel der intelligenten Zielwahl geht von der Voraussetzung aus, dass der verwendete Telefonapparat ein Anzeigefeld besitzt, auf dem mehrere, beispielsweise zehn, Textzeilen ausgegeben werden können. Neben diesem mehrzeiligen, alphanumerischen oder graphischen Display weist die Benutzeroberfläche ausserdem zu den Displayzeilen korrespondierende Funktionstasten, eine Zahlentastatur und weitere Eingabemöglichkeiten für Sonderzeichen und spezielle Funktionen auf. Alle diese Elemente sind auf dem Telefonapparat nach ergonomischen und gestalterischen Gesichtspunkten angeordnet; selbstverständlich ist im Gerät eine entsprechende Infrastruktur vorgesehen, die in der Regel aus einem Mikroprozessor und den erforderlichen Speichern besteht.

Wenn bei einem Telefon eine abgehende Verbindung aufgebaut werden soll, ist ein Wahlvorgang erforderlich. Die Nummernwahl kann dabei durch Eintippen der gewünschten Nummer in die Ta statur des Telefonapparats (= Endgerät) oder mittels einer im Gerät gespeicherten Nummer erfolgen. Für das letztere Verfahren sind die bereits in der Beschreibungseinleitung erwähnten Möglichkeiten Wahlwiederholung, Nebenspeicherung, Kurzwahl, Zielwahl und Namenwahl bekannt.

Beim erfindungsgemässen Verfahren können alle diese Verfahren in beliebigen Kombinationen verwendet werden. Grundsätzlich wird jede zu speichernde Nummer bei der Erfassung mit einem zugehörigen Klartext, beispielsweise dem Namen der betreffenden Person oder Firma, versehen. Die entsprechende gespeicherte Codierung, die im folgenden als Eintrag bezeichnet wird, wird nun mit bestimmten Attributen versehen, die eine Auswahl verschiedener Betriebszustände oder Sicherungsverfahren ermöglichen. Derartige Attribute sind beispielsweise Notattribut und Privatattribut. Das Notattribut ist für die Auswahl von Einträgen bei gesperrter Wahl; das Privatattribut wird für Nummern verwendet, die nicht mehr sichtbar und zugreifbar sein sollen, wenn eine Wahlsperre aktiv ist. Diese oder auch andere bekannte Attribute können bei den Einträgen einzeln oder gemeinsam angewendet werden.

Erfindungsgemäss wird nun ein weiteres, für den Benutzer unsichtbares Attribut vorgeschlagen, der sogenannte Häufigkeitsindikator, mit dem die Häufigkeit der Benutzung eines Eintrags registriert wird. Der Häufigkeitsindikator wird dazu verwendet, dem Benutzer die am häufigsten gewählten Nummern in alphabetisch geordneter Reihenfolge auf verschiedenen Bildschirmseiten unmittelbar ausgeben zu können. Dieses Attribut wird für jeden Eintrag automatisch verwaltet und kann daher für die verschiedensten Aufgaben, vor allem für die Speicheroptimierung mitverwendet werden. Diese ist dann von Interesse, wenn der zur Verfügung stehende Speicher voll belegt ist. In diesem Fall schlägt das Gerät den am wenigsten benutzten Eintrag zum Ueberschreiben vor. Wenn dieser Eintrag aber nicht überschrieben werden soll, dann kann das Programm solange einen anderen wenig benutzten Eintrag vorschlagen, bis der Benutzer quittiert oder die Eingabe abbricht.

Bei einem Neueintrag im Verzeichnis wird der Häufigkeitsindikator automatisch auf einen relativ hohen Benutzungswert gesetzt, so dass der Eintrag auf einer der ersten Seiten des Zielwahlverzeichnisses erscheint, und zwar so lange, als sich keine anderen Einträge in den Vordergrund schieben. Bei Ueberlauf eines Häufigkeitsindikators werden alle Einträge automatisch korrigiert, so dass zwischen diesen immer eine relative Beziehung bestehen bleibt.

Der Häufigkeitsindikator wird bei jeder Benutzung automatisch um einen oder mehrere Schritte hinaufgesetzt, wobei die Schrittweite durch Versuche ermittelt oder automatisch vorgegeben werden kann. Der absolute Wert des Indikators bestimmt das Erscheinen eines Eintrags auf der Zielwahlausgabe und die einzelnen Einträge jeder Ausgabeseite sind in sich selbst alphabetisch geordnet. Dadurch wird erreicht, dass dem Benutzer die in der vorangegangener Zeit jeweils am meisten benutzten Einträge mit Priorität angeboten werden. Sollte der gewünschte Eintrag nicht auf der ersten Seite ausgegeben werden, dann kann der Benutzer mit entsprechenden Tasten die nächste oder die vorangegangene Seite auswählen. Die Einträge auf den auf die erste Seite folgenden Seiten sind mit den geringeren Häufigkeitsindikatoren behaftet. Selbstverständlich kann der Benutzer jederzeit auf eine andere Art der Wahleingabe umschalten.

Wie schon erwähnt, bestehen die Einträge zumindest aus den Informationen über Name und Anschluss des Teilnehmers. Darüber hinaus können je nach Wunsch und Speichergrösse weitere Informationen wie Adresse, Ort, Land, Postleitzahl, Notizen und dergleichen aufgenommen und verwaltet werden. Für die Eintragssuche im Speicher kann auch ein Suchen nach Nummern zweckmässig sein, vor allem bei denjenigen neuen Systemen, die eine Information über den rufenden Teilnehmer übertragen. Diese Suche nach Nummern kann insbesondere beim sogenannten ISDN zur Klartextausgabe des rufenden Teilnehmers benutzt werden.

Die Steuerung der intelligenten Zielwahl kann zusätzlich so beeinflusst werden, dass eine Neuorganisation der Bildschirm seiten nur auf speziellen Wunsch des Benutzers geschehen kann. Je nach System besteht auch die Möglichkeit, Teile oder ganze Verzeichnisse (TVA) von Systemen einzulesen oder zu aktualisieren. Damit wird die Anwendung innerhalb von geschlossenen Systemen ideal ergänzt. Beim Ergänzen von Einträgen wird die bestehende Struktur der intelligenten Zielwahl beibehalten. Damit ist sichergestellt, dass die operationellen Attribute des jeweiligen Benutzers nicht verändert werden. Zur Ergänzung des internen Verzeichnisses können auch Zugriffe auf externe Datenbanken vorgesehen werden, wodurch die Aktualisierung der Benutzerverzeichnisse genauer und einfacher wird.

Durch verschiedene Arten von Wahlsperren soll ein unbefugter Benutzer eines Endgerätes für abgehende Gespräche ausgeschlossen werden. Diese Sperren können entweder jede Wahl verhindern oder nur bestimmte Nummernkombinationen ausschliessen. Bei der intelligenten Zielwahl können die Wahlsperren für jede gespeicherte Nummer unterschiedlich sein. Die einzelnen Einträge können beispielsweise für totale Sperre, Notruf, Ziffernbereichssperre oder zeitliche Wahlbeschränkungen gesetzt werden. Totale Sperre bedeutet, dass der Eintrag bei eingelegter Sperre unsichtbar ist; bei Notruf kann die Rufnummer durch beliebigen Tastendruck gewählt werden; Ziffernbereichssperre verhindert die Wahl bestimmter Nummernkombinationen (z.B. Fernwahl) und zeitliche Wahlbeschränkungen werden innerhalb gewisser Zeiten automatisch eingeschaltet.

Alle diese Verfahren können bei der intelligenten Zielwahl vorgesehen werden. Darüber hinaus kann noch eine sogenannte "Privat"-Markierung verwendet werden, die einen Schutz von persönlichen Einträgen erlaubt. Ein mit "privat" markierter Eintrag wird unsichtbar, sobald eine Wahlsperre oder Blockierung aktiv ist.

Jeder Eintrag von Teilnehmerdaten wird im Speicher durch eine entsprechende Registrierung dargestellt, welche ausser den echten Daten noch zusätzliche Informationen enthält, die für die intelligente Steuerung, eine alphabetische Steuerung und andere benutzt werden können. Die verschiedenen Einträge werden im Speicher zu einer Liste verknüpft. Dabei spielt die Reihenfolge der Einträge in die Liste keine Rolle, da die Liste unter Zuhilfenahme von "Zeigern" sortiert wird. Es sind insbesondere zwei derartige Zeiger vorgesehen, ein Namenzeiger (= Zeiger auf nächsten Eintrag nach Namen sortiert) und ein Markenzeiger (= Zeiger auf nächsten Eintrag nach Marken sortiert). Diese Marken sind die schon genannten Häufigkeitsindikatoren.

Mit den Namenzeigern werden die Einträge alphanumerisch sortiert und mit den Markenzeigern nach dem Häufigkeitsindikator. Die Einträge in die Liste beginnen mit der laufenden Nummer "1". Es ist auch ein Eintrag mit der Nummer "0" vorhanden; dieser sogenannte Basis-Eintrag, der den Listenanfang bildet, ist generell definiert, und zwar steht der Namenzeiger auf dem ersten Nameneintrag, der Markenzeiger auf dem ersten Markeneintrag und der Häufigkeitsindikator auf einem vorgegebenen Maximalwert von beispielsweise 140. Mit jedem neuen Eintrag gehen Namen- und Markenzeiger auf den nächsten Namen- beziehungsweise Markeneintrag. Jede Benutzung eines bereits vorhandenen Eintrags setzt den Häufigkeitsindikator automatisch um einen oder mehrere Schritte hinauf.

Wenn auf diese Weise im Speicher eine grössere Liste erzeugt ist und eine Anzahl von Benutzungen stattgefunden hat, besteht im Speicher eine bestimmte Hierarchie der Häufigkeitsindikatoren. Diese werden vorzugsweise in absteigender Reihenfolge sortiert. Je nach Anzahl der Ausgabezeilen auf dem Display werden die Einträge vor ihrer Ausgabe auf dem Display noch alphabetisch sortiert, so dass die einzelnen Benützungsseiten unabhängig von der Wertigkeit in sich selbst geordnet auf der Ausgabe erscheinen.

Wie erwänt, besitzt das als Beispiel verwendete Telefon ein Display für die Ausgabe von 10 Textzeilen, wobei jeder Textzeile eine Funktionstaste zugeordnet ist, mit der die jeweils angezeigte Funktion aktiviert werden kann. Für die Ablaufsteuerung besitzt das Telefon noch weitere, festen Funktionen zugeordnete Eingabetasten. Diese werden zum seitenweisen Blättern der Anzeige, also zur Cursorsteuerung, benutzt.

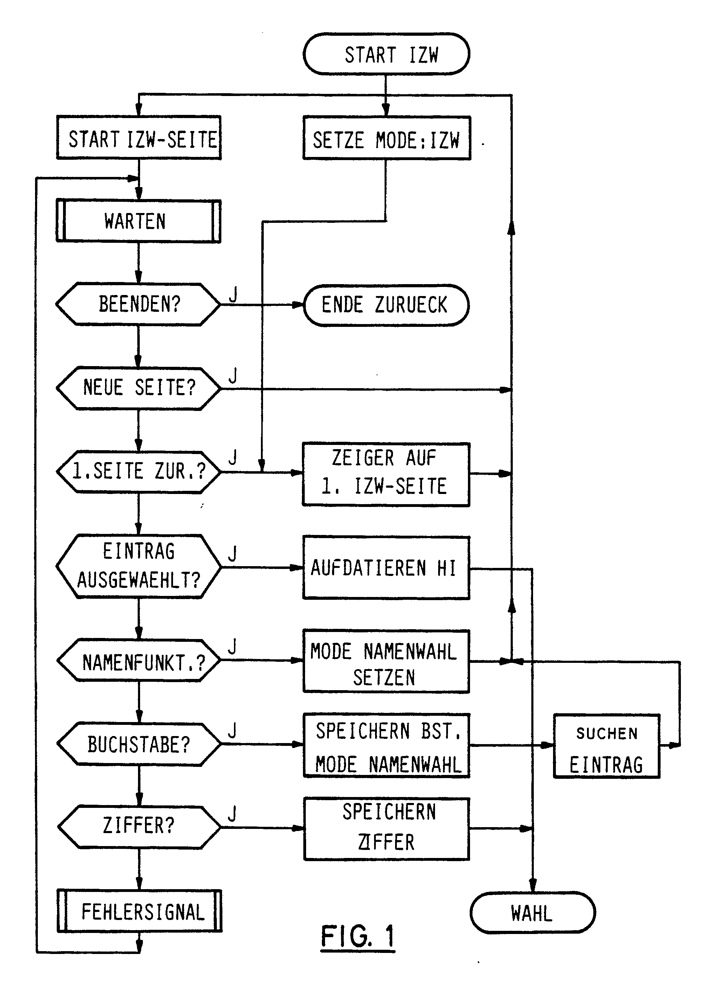

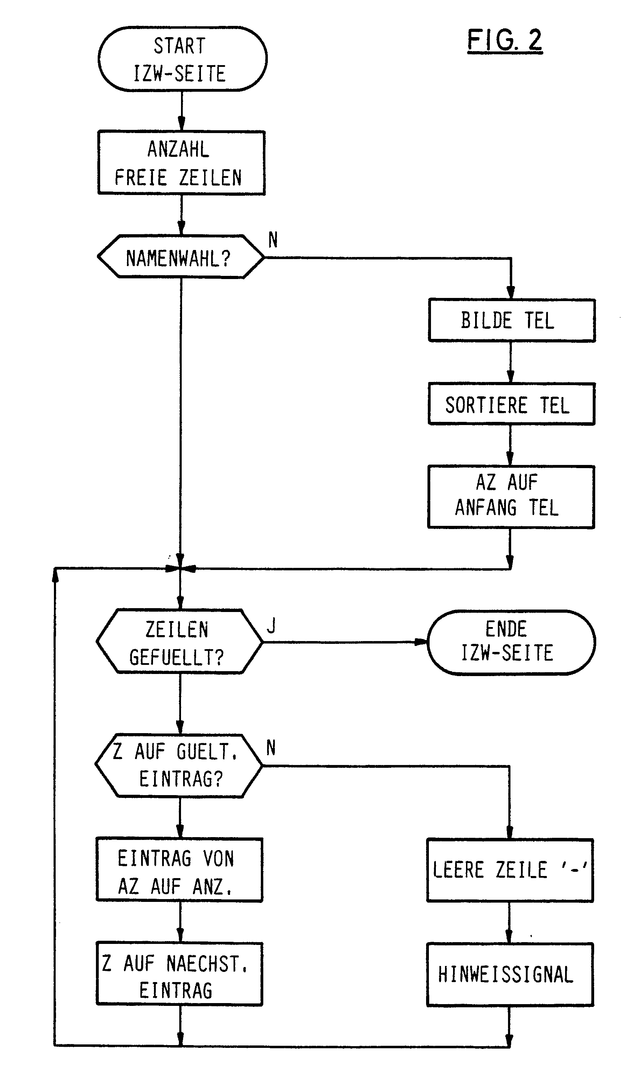

In den Flussdiagrammen der Figuren 1 und 2 ist die Ausgabe auf dem Display nach dem Belegen des Telefonapparats dargestellt; dabei zeigt Fig. 1 die gesamte Ablaufsteuerung und Fig. 2 die eigentliche Ausgabe auf dem Display.

Mit dem Abheben des Hörers (Start intelligente Zielwahl IZW) wird der Mode IZW gesetzt und der Apparat ist bereit für eine Benutzerführung mit intelligenter Zielwahl. Der Zeiger wird auf die erste IZW-Seite gesetzt und es erfolgt die Ausgabe dieser ersten, oder gegebenenfalls einer folgenden IZW-Seite. Im Mode-Namenwahl wird entsprechend die erste oder eine folgende Namenseite ausgegeben. Dieser Schritt ist im Flussdiagramm von Fig. 1 als "Start IZW-Seite" bezeichnet; Fig. 2 zeigt das Flussdiagramm des entsprechenden Unterprogramms.

Nun befindet sich der Ablauf im Zustand "Warten", bei welchem eine Aktivität des Benutzers, beispielsweise eine Tasteneingabe, eine Belegung oder eine Aenderung des Belegungszustands, ein Anruf oder ein Timeout zu erfolgen hat. Es besteht die Möglichkeit des Abbrechens der Operation ("Beenden", "Ende zurück") oder von deren Fortsetzung mittels Blättern bis zur Seite mit dem gesuchten Eintrag. Jede Seite wird dann mittels "Start IZW-Seite" ausgegeben und der gesuchte Eintrag kann ausgewählt werden. Erfolgt dies, dann wird der Häufigkeitsindikator HI des ausgewählten Eintrags aufdatiert, und zwar nach der Formel:

$$HI\ neu = (HI\ alt + (HI\ max - HI\ alt)/2) + 2$$

HI max wird gleich 140 gewählt. Mit dieser Aufdatierung ist für den betreffenden Fall die Benutzerführung beendet, und es kann der Wahlvorgang stattfinden ("WAHL"), das heisst, die betreffende Nummer kann angerufen werden.

Neben der intelligenten Zielwahl ist auch eine Namenwahl mit Benutzerführung und eine Kurzwahl möglich. Für die Namenwahl gelangt man von "Eintrag ausgewählt" über "Namenfunktion" zum Schritt "Mode Namenwahl setzen". Der Zeiger wird auf den ersten Eintrag gesetzt und die betreffende Seite wird ausgegeben ("Start IZW-Seite"). Nun wird der Anfangsbuchstabe des gesuchten Namens eingegeben ("Buchstabe") und gespeichert und es wird der Mode Namenwahl gesetzt. Dann wird der entsprechende Eintrag gesucht, der mit der Zeichenkette beginnt. Dabei können zusätzlich zum Anfangsbuchstaben noch weitere Buchstaben eingegeben werden. Wenn die Seite mit dem gesuchten Eintrag angezeigt wird, kann dieser ausgewählt werden. Ueber "Eintrag ausgewählt" und "Aufdatieren HI" gelangt man schliesslich zum Wahlvorgang ("Wahl").

Für die Kurzwahl gelangt man von "Buchstabe" nach "Ziffer", wo eine Ziffer oder ein anderes Zeichen eingegeben werden kann. Diese wird gespeichert, und es wird auf Mode Direktwahl umgeschaltet ("Speichern Ziffer") und die der eingegebenen Ziffer oder dem eingegebenen Zeichen zugeordnete Nummer wird direkt angewählt ("Wahl"). Wenn in allen beschriebenen Fällen keine gültige Auswahl erfolgt ist, wird ein Fehlersignal ausgegeben und der Ablauf springt in den Zustand "Warten" zurück.

Bei dem in Fig. 2 dargestellten Unterprogramm "Start IZW-Seite" für die Ausgabe der Seiten auf dem Display wird zuerst die Anzahl der freien Zeilen ermittelt und dann erfolgt eine Unterscheidung, ob es sich um einen Mode Namenwahl oder um einen Mode intelligente Zielwahl handelt. Im letzteren Fall wird zuerst eine temporäre Eintragsliste gebildet ("Bilde TEL"), welche dann nach Namen sortiert wird ("Sortiere TEL"). Dann wird der Ausgabezeiger auf den Anfang der temporären Liste gesetzt ("AZ auf Anfang TEL"). Anschliessend wird überprüft, ob alle freien Zeilen gefüllt sind ("Zeilen gefüllt"). Dies Ueberprüfung erfolgt beim Mode Namenwahl unmittelbar nach der Unterscheidung des Modes ("Namenwahl"). Sind alle freien Zeilen gefüllt, dann erfolgt mit "Ende IZW-Seite" der Rücksprung ins Hauptprogramm.

Wenn nicht alle freien Zeilen gefüllt sind, wird überprüft, ob der Zeiger auf einem gültigen Eintrag steht ("Z auf gült. Eintrag"). Ist dies nicht der Fall, dann erfolgt der Befehl, eine leere Zeile mit dem Zeichen '-' ("Leere Zeile '-'") ausgegeben und anschliessend erfolgt ein weiterer Befehl zur Ausgabe eines Hinweissignals ("Hinweissignal"). Dann erfolgt wieder eine Ueberprüfung, ob alle freien Zeilen gefüllt sind.

Steht der Zeiger auf einem gültigen Eintrag, dann wird dieser Eintrag vom Ausgabezeiger auf die Anzeige transferiert ("Eintrag von AZ auf Anz.") Dann wird der Zeiger auf den nächsten Eintrag gestellt ("Z auf nächst. Eintrag") und es erfolgt wieder eine Ueberprüfung, ob alle freien Zeilen gefüllt sind. Dies wird spätestens nach einigen Einträgen der Fall sein, wo dann mit "Ende IZW-Seite" der Rücksprung ins Hauptprogramm erfolgt.

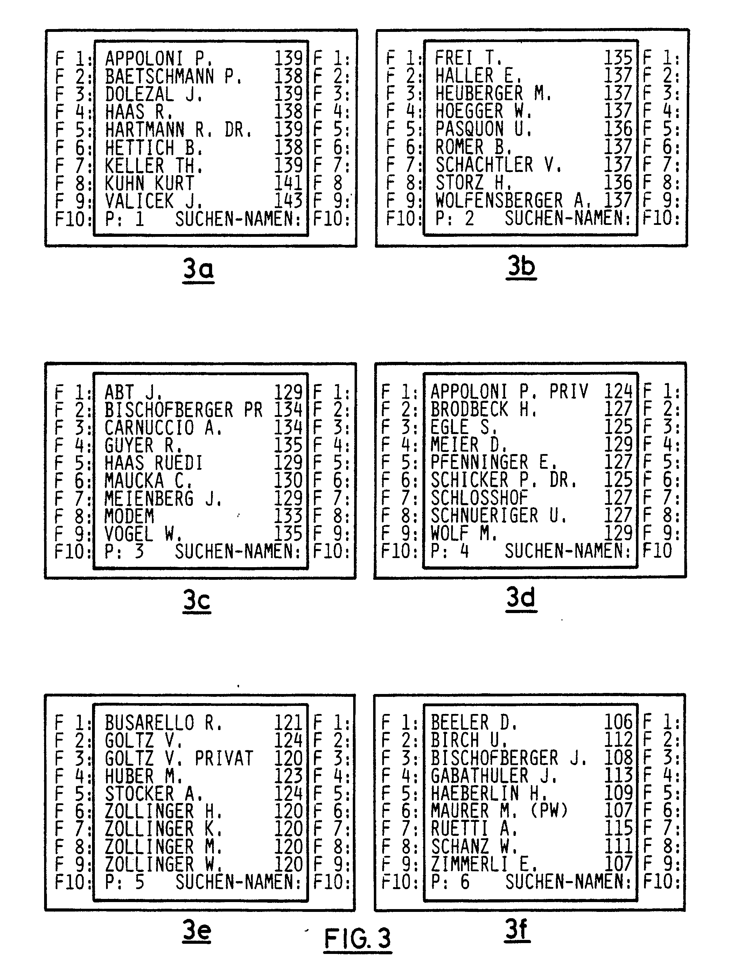

Die in den Fig. 1 und 2 anhand von Flussdiagrammen dargestellten Abläufe sollen nun in den Fig. 3 bis 8 mit konkreten Beispielen erläutert werden. Die Fig. 3 bis 8 zeigen Darstellungen von auf dem Display des Telefons bei der intelligenten Zielwahl und bei der Namenwahl sowie bei Ergänzungen und Veränderungen von Einträgen angegebenen Seiten, wobei in jeder der Figuren jeweils sechs auf einem Zeichnungsblatt angeordnete Anzeigen dargestellt sind.

In Fig. 3a ist der Ausgangszustand, die Basisseite, dargestellt. Diese Seite erscheint immer, wenn der Telefonhörer abgehoben oder das Telefon in irgendeiner anderen Art belegt wird. Im Anzeigefenster (Display) erscheinen die Namen der am meisten gebrauchten Rufnummern. Zum besseren Verständnis sind jeweils am rechten Zeilenrand die zugehörigen Häufigkeitsindikatoren angegeben. Jede Seite ist in sich selbst alphabetisch sortiert. Dadurch erscheinen zwar die Häufigkeits indikatoren nicht in absteigender Reihenfolge, aber der Benutzer erhält eine bessere Uebersicht. Neben den einzelnen Zeilen des Anzeigefeldes sind die zugeordneten Funktionstasten F1 bis F10 angegeben. Mit diesen Funktionstasten können nicht nur die zugehörigen Namen abgerufen, sondern es können auch bestimmte, in der jeweiligen Zeile angezeigte Funktionen ausgeführt werden.

Fig. 3b zeigt den Ausgangszustand von Seite 2, Fig. 3c denjenigen von Seite 3, Fig. 3d den von Seite 4, Fig. 3e den Ausgangszustand von Seite 5 und Fig. 3f den von Seite 6.

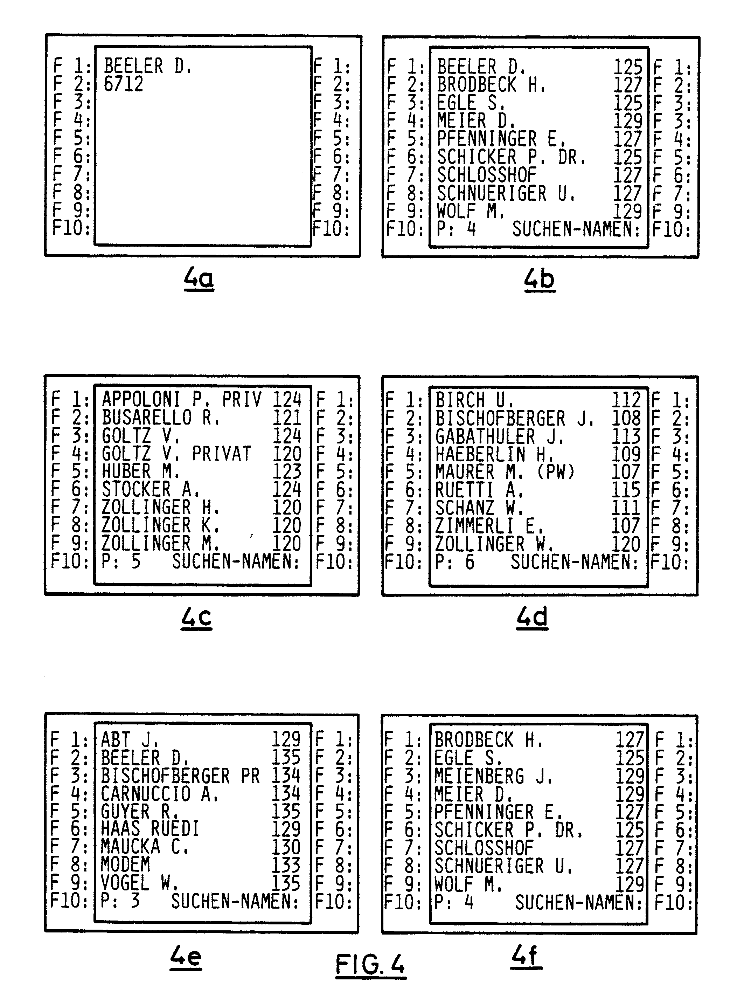

Auf der in Fig. 3f dargestellten Anzeige erscheint in der ersten Zeile der Name "BEELER". Wenn nun durch Betätigen der zugehörigen Taste F1 der Eintrag "BEELER 106" gewählt wird, dann erscheint gemäss Fig, 4a auf dem Bildschirm die Anzeige in einer um die Rufnummer in der zweiten Zeile expandierten Form. Weitere Angaben können nach Belieben und Organisation der Datensätze angegeben werden. Durch die Wahl dieses Eintrags erhöht sich der Häufigkeitsindikator vom Wert HI alt = 106 auf HI neu = 125. Dementsprechend gelangt nun der Eintrag "BEELER" bei erneuter Benutzung mit dem höheren Häufigkeitsindikator 125 gemäss Fig. 4b in die erste Zeile von Seite P:4. Die Fig. 4c und 4d zeigen die weiteren, durch die Verschiebung des Eintrags "BEELER" von Seite P:6 auf Seite P:4 verursachten Verschiebungen auf den Seiten P:5 und P:6.

Wenn nun analog zu Fig. 3f wiederum der Eintrag "BEELER" gewählt wird (diesmal durch Betätigen der Taste F1 auf Seite P:4), dann erfolgt die gleiche Anzeige wie in Fig. 4a. Der Häufigkeitsindikator des Eintrags "BEELER" wird neuerlich erhöht, diesmal von 125 auf 135. Damit gelangt dieser Eintrag gemäss Fig. 4e in die zweite Zeile von Seite P:3 und verdrängt den Eintrag "MEIENBERG 129" von dieser auf Seite P:4 (Fig. 4f). Die Seiten P:5 und P:6 bleiben unverändert so wie in den Fig. 4c und 4d dargestellt.

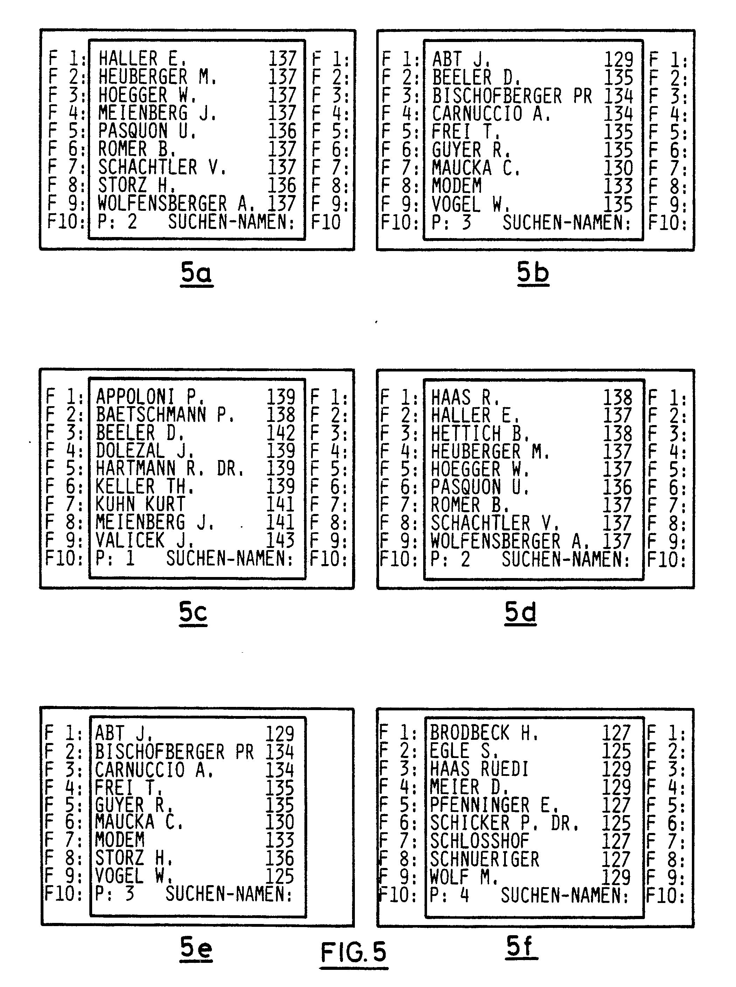

Nun soll ein anderer Eintrag benutzt werden, beispielsweise der Eintrag "MEIENBERG" auf Seite P:4 (Fig. 4f). Durch Betätigen der Taste F3 erscheint auf der Anzeige analog zu Fig. 4a die Anzeige "MEIENBERG" in einer um die zugehörige Rufnummer expandierten Form. Der Häufigkeitsindikator dieses Eintrags erhöht sich von 129 auf 137 und gelangt gemäss Fig. 5a auf Seite P:2. Der Eintrag "MEIENBERG" liegt somit wieder vor dem Eintrag "BEELER" der sich gemäss Fig. 5b auf Seite P:3 befindet. Durch das Vorrutschen von "MEIENBERG" ist der Eintrag "FREI" von Seite P:2 (Fig. 3b) auf Seite P:3 verdrängt worden.

Wenn nun erneut der Eintrag "BEELER" zweimal und der Eintrag "MEIENBERG" einmal benutzt wird, dann ergeben sich für die Seiten P:1 bis P:4 die in den Fig. 5c bis 5f dargestellten Anzeigen. Die Seiten P:5 bis P:6 ändern sich dadurch nicht und bleiben so wie in den Fig. 4c und 4d dargestellt.

In der Eintragsdatei kann die Suche nach einem bestimmten Namen auch über eine alphabetische Eingabe erfolgen. Dies ist besonders dann vorteilhaft, wenn die Eintragsdatei eine grössere Anzahl von Einträgen enthält. Bei dieser alphabetischen Suche werden die mit dem eingegebenen Buchstaben oder der eingegebenen Buchstabenkombination beginnenden Einträge ausgegeben.

Ausgehend von der Basisseite (Fig. 3a) wird durch Betätigung der Taste F10 oder einer Buchstabentaste auf Namenssuche umgeschaltet. Nun wird der 1. Buchstabe des gesuchten Namens ausgegeben. Ist dieser 1. Buchstabe beispielsweise ein "K", dann erscheinen die entsprechenden Einträge. Der gesuchte Eintrag kann nun durch seitenweises Blättern im K-Verzeichnis erreicht werden, oder einfacher durch weitere Eingabe des zweiten und gegebenenfalls weiterer Buchstaben.

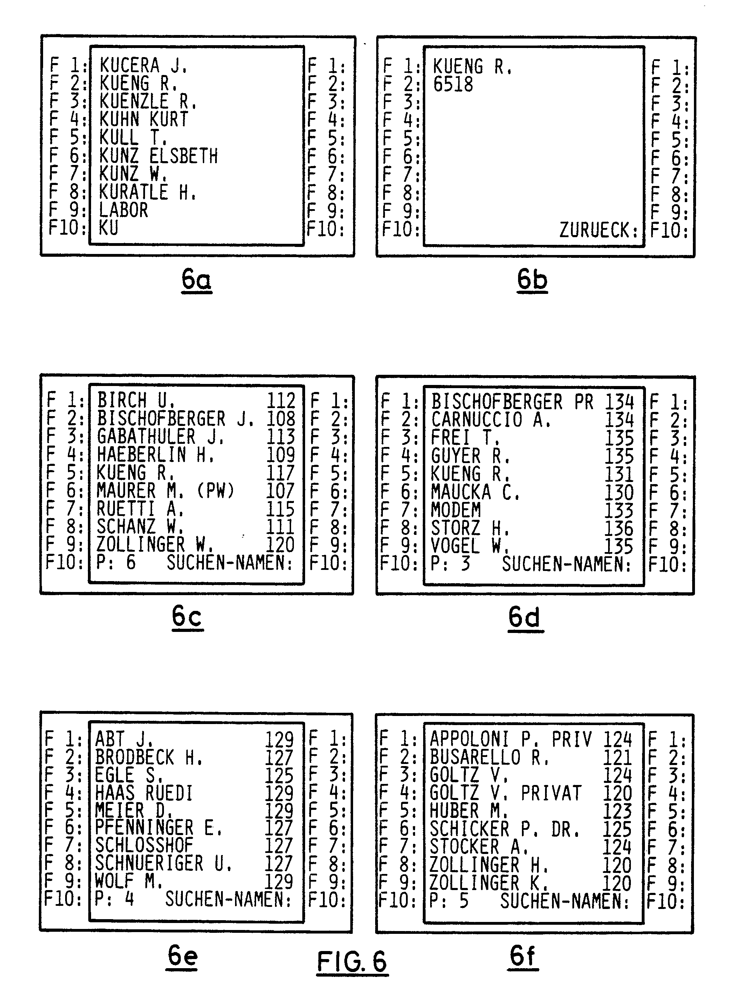

Beim Beispiel von Fig. 6 wird nach dem Namen KUENG gesucht und es werden die Anfangsbuchstaben "KU" eingegeben, worauf die Anzeige gemäss Fig. 6a erscheint. Durch Auswahl des Eintrags "KUENG" mittels der Taste F2 (Fig. 6b) wird die zugeordnete Nummer gewählt. Der Häufigkeitsindikator des Eintrags "KUENG" wird wie bei der intelligenten Zielwahl verändert. Dies ist in den Fig. 6c bis 6f dargestellt.

Der Eintrag KUENG, der bisher nicht auf den ersten sechs Sei ten zu finden war, gelangt nun mit seinem neuen Häufigkeitsindikator 117 auf die Seite P:6 (Fig. 6c). Wird nun der Eintrag "KUENG" nochmals benutzt, dann erhöht sich sein Häufigkeitsindikator auf 131 und der Eintrag gelangt auf die Seite P:3 (Fig. 6d). Die Seiten P:4 bis P:6 ändern sich entsprechend. Die Seite P:4 ist in Fig. 6e und die Seite P:5 in Fig. 6f dargestellt. Die Seite P:6 hat wieder das in Fig. 4d gezeigte Aussehen, mit dem einen Unterschied, dass der Eintrag "ZIMMERLI E." durch "ZOLLINGER M." ersetzt ist.

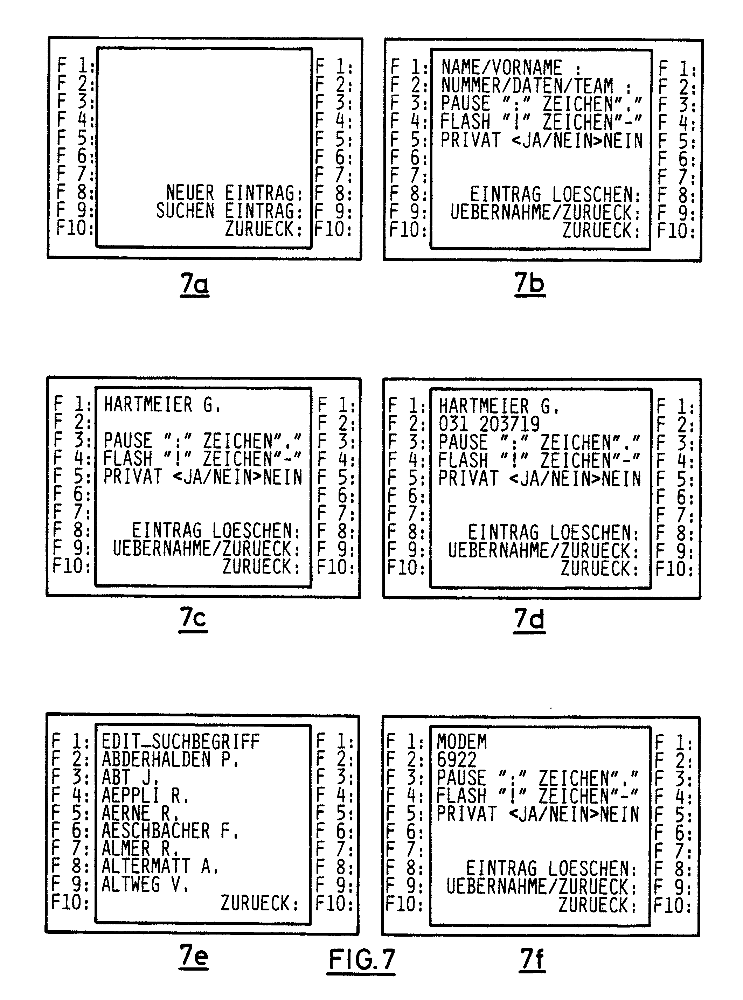

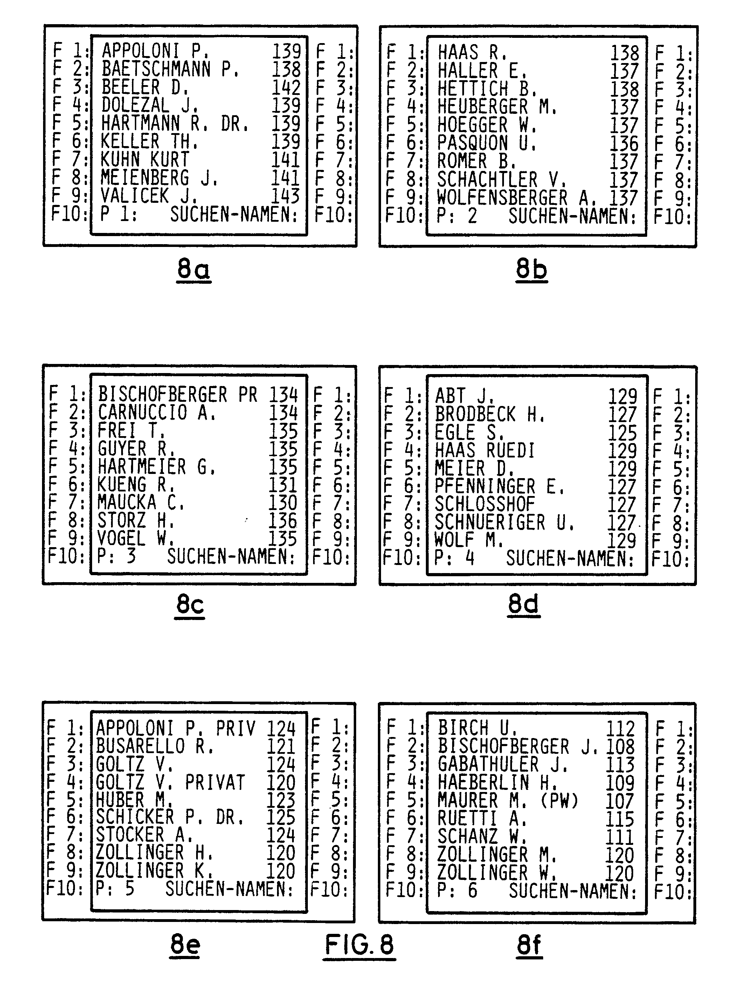

Zur Ergänzung und/oder Veränderung von Einträgen kann ein Menue und ein Programmzustand gewählt werden. In den Fig. 7 und 8 ist dargestellt, welchen Einfluss eine Veränderung der Dateneinträge auf die IZW-Seiten hat. Fig. 7a zeigt die Menueseite "Ergänzen von Einträgen", welche durch Betätigen einer entsprechenden Taste ausgegeben wird. Drückt man nun die Taste F8, dann erscheint das in Fig. 7b dargestellte Untermenue "Einträge". Mit der Taste F1 wird auf die Eingabe des Namens "HARTMEIER G." (Fig. 7c) und mit der Taste F2 auf die Eingabe der zugehörigen Rufnummer umgeschaltet (Fig. 7d). Die Nummerzeile ist eingegeben, wenn eine entsprechende andere Funktionstaste gedrückt wird. Durch Betätigen der Taste F9 wird nun der Eintrag abgeschlossen und in die Liste eingefügt. Anschliessend erscheint wieder die Seite mit dem Eintragsmenue (Fig. 7a).

Durch Drücken von F9 kann ein Eintrag gesucht und dann verändert oder gelöscht werden. Es erscheint die Anzeige von Fig. 7e und der betreffende Eintrag kann alphabetisch gesucht werden. Durch Eingabe der Anfangsbuchstaben des gewünschten Eintrags in die erste Zeile erscheint dann dieser Eintrag. Gibt man beispielsweise "MO" ein, dann erscheint der Eintrag "MODEM" der vorherigen IZW-Seite P:3 (Fig. 6d), der nun durch Drücken der Taste F8 gelöscht werden kann.

Wenn dies erfolgt, präsentieren sich die IZW-Seiten P:1 bis P:6 in der in Fig. 8 dargestellten Form. Auf der Seite P:3 (Fig. 8c) erscheint neu der Eintrag "HARTMEIER" mit dem Häufigkeitsindikator 135. Da dieser Eintrag neu entstanden ist, ist anzunehmen, dass er in absehbarer Zukunft auch benutzt wird. Deswegen hat er, wie alle Neueinträge, den relativ hohen Häufigkeitsindikator 135 erhalten. Selbstverständlich ist der absolute Wert des Häufigkeitsindikators eines Neueintrags an sich beliebig. Es hat sich aber gezeigt, dass sich die Verwendung eines relativ hohen Häufigkeitsindikators für Neueinträge in der Praxis sehr gut bewährt. Andererseits ist der Eintrag "MODEM" durch die Löschung von der Seite P:3 und aus der ganzen Datei verschwunden.

### Ansprüche

1. Verfahren zur Vereinfachung der Benützung von Mensch-Maschinen-Schnittstellen von komplexen Systemen, insbesondere von Kommunikationsendgeräten, welche eine Benutzeroberfläche mit einem Anzeigefeld und mit mindestens einer Tastatur sowie eine entsprechende Infrastruktur mit einer Steuerung und mit Speichern aufweisen, in welchen verschiedene, bestimmten Funktionen, Grössen oder Objekten entsprechende Codierungen speicherbar und aus welchem die nachfolgend als Einträge bezeichneten gespeicherten Codierungen abrufbar sind, dadurch gekennzeichnet, dass:

a. Jeder Eintrag mit einem nachfolgend als Häufigkeitsindikator bezeichneten Attribut versehen wird, mit welchem die Häufigkeit der Benutzung jedes Eintrags registriert wird; und

b. anhand des Häufigkeitsindikators eine Klassierung der Einträge nach ihrer Benutzungshäufigkeit erfolgt.

2. Verfahren nach Anspruch 1, dadurch gekennzeichnet, dass die Einträge dem Benutzer im Anzeigefeld in ihrer klassierten Struktur angegeben werden.

3. Verfahren nach Anspruch 1, dadurch gekennzeichnet, dass der Häufigkeitsindikator durch eine skalare Grösse, vorzugsweise durch eine Zahl, gebildet ist, und dass die Einträge anhand der Grösse dieser Zahl sortiert werden.

4. Verfahren nach Anspruch 3, dadurch gekennzeichnet, dass bei jeder Benutzung eines Eintrags dessen Häufigkeitsindikator um eine definierte Schrittweite von mindestens einem Schritt erhöht wird.

5. Verfahren nach Anspruch 4, dadurch gekennzeichnet, dass die Erhöhung des Häufigkeitsindikators bei Benutzung eines Eintrags nach der Formel:

$$HI\ neu = (HI\ alt + (HI\ max - HI\ alt)/2) + 2$$

erfolgt, wobei HI alt den bisherigen und HI max einen vorgebbaren Maximalwert des Häufigkeitsindikators bezeichnet.

6. Verfahren nach Anspruch 5, dadurch gekennzeichnet, dass bei einem Neueintrag im Verzeichnis der Häufigkeitsindikator auf einen relativ hohen Startwert gesetzt wird.

7. Verfahren nach Anspruch 6, dadurch gekennzeichnet, dass der Startwert des Häufigkeitsindikators gleich 80 bis 100% von dessen Maximalwert gewählt wird.

8. Verfahren nach einem der Ansprüche 1 bis 7 zur Verwendung für Zielwahl mit Telefonapparaten, wobei die Einträge durch Namen samt zugehörigen Rufnummern gebildet sind und das Anzeigefeld mehrere Zeilen aufweist, dadurch gekennzeichnet, dass die Einträge auf dem Anzeigefeld seitenweise, für jede Seite in einer geeignet, vorzugsweise nach Wichtigkeit oder alphabetisch, geordneten Reihenfolge, ausgegeben werden.

9. Verfahren nach den Ansprüchen 4 und 8, dadurch gekennzeichnet, dass auf dem Anzeigefeld in jeder Zeile ein Name und gegebenenfalls ein Symbol angezeigt wird, und dass jede Auswahl eines Namens als Benutzung dieses Eintrags gewertet wird.

10. Verfahren nach einem der Ansprüche 1 bis 7, dadurch gekennzeichnet, dass bei Ueberschreiten eines vorgegebenen Höchstwerts des Häufigkeitsindikators durch einen Eintrag die Häufigkeitsindikatoren aller Einträge verkleinert werden, wobei die vorherige relative Beziehung zwischen ihnen erhalten bleibt.

11. Verfahren nach einem der Ansprüche 1 bis 7, dadurch gekennzeichnet, dass bei der aktuellen Auswahl zusätzliche Attribute mitberücksichtigt werden.

FIG. 1

FIG. 2

```
F 1: APPOLONI P.          139  F 1:
F 2: BAETSCHMANN P.       138  F 2:
F 3: DOLEZAL J.           139  F 3:
F 4: HAAS R.              138  F 4:
F 5: HARTMANN R. DR.      139  F 5:
F 6: HETTICH B.           138  F 6:
F 7: KELLER TH.           139  F 7:
F 8: KUHN KURT            141  F 8
F 9: VALICEK J.           143  F 9:
F10: P: 1   SUCHEN-NAMEN:       F10:
```

**3a**

```
F 1: FREI T.              135  F 1:
F 2: HALLER E.            137  F 2:
F 3: HEUBERGER M.         137  F 3:
F 4: HOEGGER W.           137  F 4:
F 5: PASQUON U.           136  F 5:
F 6: ROMER B.             137  F 6:
F 7: SCHACHTLER V.        137  F 7:
F 8: STORZ H.             136  F 8:
F 9: WOLFENSBERGER A.     137  F 9:
F10: P: 2   SUCHEN-NAMEN:       F10:
```

**3b**

```
F 1: ABT J.               129  F 1:
F 2: BISCHOFBERGER PR     134  F 2:
F 3: CARNUCCIO A.         134  F 3:
F 4: GUYER R.             135  F 4:
F 5: HAAS RUEDI           129  F 5:
F 6: MAUCKA C.            130  F 6:
F 7: MEIENBERG J.         129  F 7:
F 8: MODEM                133  F 8:
F 9: VOGEL W.             135  F 9:
F10: P: 3   SUCHEN-NAMEN:       F10:
```

**3c**

```
F 1: APPOLONI P. PRIV     124  F 1:
F 2: BRODBECK H.          127  F 2:
F 3: EGLE S.              125  F 3:
F 4: MEIER D.             129  F 4:
F 5: PFENNINGER E.        127  F 5:
F 6: SCHICKER P. DR.      125  F 6:
F 7: SCHLOSSHOF           127  F 7:
F 8: SCHNUERIGER U.       127  F 8:
F 9: WOLF M.              129  F 9:
F10: P: 4   SUCHEN-NAMEN:       F10
```

**3d**

```
F 1: BUSARELLO R.         121  F 1:
F 2: GOLTZ V.             124  F 2:
F 3: GOLTZ V. PRIVAT      120  F 3:
F 4: HUBER M.             123  F 4:
F 5: STOCKER A.           124  F 5:
F 6: ZOLLINGER H.         120  F 6:
F 7: ZOLLINGER K.         120  F 7:
F 8: ZOLLINGER M.         120  F 8:
F 9: ZOLLINGER W.         120  F 9:
F10: P: 5   SUCHEN-NAMEN:       F10:
```

**3e**

```
F 1: BEELER D.            106  F 1:
F 2: BIRCH U.             112  F 2:
F 3: BISCHOFBERGER J.     108  F 3:
F 4: GABATHULER J.        113  F 4:
F 5: HAEBERLIN H.         109  F 5:
F 6: MAURER M. (PW)       107  F 6:
F 7: RUETTI A.            115  F 7:
F 8: SCHANZ W.            111  F 8:
F 9: ZIMMERLI E.          107  F 9:
F10: P: 6   SUCHEN-NAMEN:       F10:
```

**3f**

**FIG. 3**

```
F 1: ┌─BEELER D.──────────┐ F 1:
F 2: │ 6712               │ F 2:
F 3: │                    │ F 3:
F 4: │                    │ F 4:
F 5: │                    │ F 5:
F 6: │                    │ F 6:
F 7: │                    │ F 7:
F 8: │                    │ F 8:
F 9: │                    │ F 9:
F10: └────────────────────┘ F10:
```

**4a**

```
F 1: ┌─BEELER D.         125─┐ F 1:
F 2: │ BRODBECK H.       127 │ F 2:
F 3: │ EGLE S.           125 │ F 3:
F 4: │ MEIER D.          129 │ F 3:
F 5: │ PFENNINGER E.     127 │ F 4:
F 6: │ SCHICKER P. DR.   125 │ F 5:
F 7: │ SCHLOSSHOF        127 │ F 6:
F 8: │ SCHNUERIGER U.    127 │ F 7:
F 9: │ WOLF M.           129 │ F 9:
F10: │ P: 4    SUCHEN-NAMEN: │ F10:
      └──────────────────────┘
```

**4b**

```
F 1: ┌─APPOLONI P. PRIV 124─┐ F 1:
F 2: │ BUSARELLO R.      121 │ F 2:
F 3: │ GOLTZ V.          124 │ F 3:
F 4: │ GOLTZ V. PRIVAT   120 │ F 4:
F 5: │ HUBER M.          123 │ F 5:
F 6: │ STOCKER A.        124 │ F 6:
F 7: │ ZOLLINGER H.      120 │ F 7:
F 8: │ ZOLLINGER K.      120 │ F 8:
F 9: │ ZOLLINGER M.      120 │ F 9:
F10: │ P: 5    SUCHEN-NAMEN: │ F10:
      └──────────────────────┘
```

**4c**

```
F 1: ┌─BIRCH U.          112─┐ F 1:
F 2: │ BISCHOFBERGER J.  108 │ F 2:
F 3: │ GABATHULER J.     113 │ F 3:
F 4: │ HAEBERLIN H.      109 │ F 4:
F 5: │ MAURER M. (PW)    107 │ F 5:
F 6: │ RUETTI A.         115 │ F 6:
F 7: │ SCHANZ W.         111 │ F 7:
F 8: │ ZIMMERLI E.       107 │ F 8:
F 9: │ ZOLLINGER W.      120 │ F 9:
F10: │ P: 6    SUCHEN-NAMEN: │ F10:
      └──────────────────────┘
```

**4d**

```
F 1: ┌─ABT J.            129─┐ F 1:
F 2: │ BEELER D.         135 │ F 2:
F 3: │ BISCHOFBERGER PR  134 │ F 3:
F 4: │ CARNUCCIO A.      134 │ F 4:
F 5: │ GUYER R.          135 │ F 5:
F 6: │ HAAS RUEDI        129 │ F 6:
F 7: │ MAUCKA C.         130 │ F 7:
F 8: │ MODEM             133 │ F 8:
F 9: │ VOGEL W.          135 │ F 9:
F10: │ P: 3    SUCHEN-NAMEN: │ F10:
      └──────────────────────┘
```

**4e**

```
F 1: ┌─BRODBECK H.       127─┐ F 1:
F 2: │ EGLE S.           125 │ F 2:
F 3: │ MEIENBERG J.      129 │ F 3:
F 4: │ MEIER D.          129 │ F 4:
F 5: │ PFENNINGER E.     127 │ F 5:
F 6: │ SCHICKER P. DR.   125 │ F 6:
F 7: │ SCHLOSSHOF        127 │ F 7:
F 8: │ SCHNUERIGER U.    127 │ F 8:
F 9: │ WOLF M.           129 │ F 9:
F10: │ P: 4    SUCHEN-NAMEN: │ F10:
      └──────────────────────┘
```

**4f**

## FIG. 4

```
F 1: HALLER E.              137   F 1:
F 2: HEUBERGER M.           137   F 2:
F 3: HOEGGER W.             137   F 3:
F 4: MEIENBERG J.           137   F 4:
F 5: PASQUON U.             136   F 5:
F 6: ROMER B.               137   F 6:
F 7: SCHACHTLER V.          137   F 7:
F 8: STORZ H.               136   F 8:
F 9: WOLFENSBERGER A.       137   F 9:
F10: P: 2   SUCHEN-NAMEN:         F10
```

**5a**

```
F 1: ABT J.                 129   F 1:
F 2: BEELER D.              135   F 2:
F 3: BISCHOFBERGER PR       134   F 3:
F 4: CARNUCCIO A.           134   F 4:
F 5: FREI T.                135   F 5:
F 6: GUYER R.               135   F 6:
F 7: MAUCKA C.              130   F 7:
F 8: MODEM                  133   F 8:
F 9: VOGEL W.               135   F 9:
F10: P: 3   SUCHEN-NAMEN:         F10:
```

**5b**

```
F 1: APPOLONI P.            139   F 1:
F 2: BAETSCHMANN P.         138   F 2:
F 3: BEELER D.              142   F 3:
F 4: DOLEZAL J.             139   F 4:
F 5: HARTMANN R. DR.        139   F 5:
F 6: KELLER TH.             139   F 6:
F 7: KUHN KURT              141   F 7:
F 8: MEIENBERG J.           141   F 8:
F 9: VALICEK J.             143   F 9:
F10: P: 1   SUCHEN-NAMEN:         F10:
```

**5c**

```
F 1: HAAS R.                138   F 1:
F 2: HALLER E.              137   F 2:
F 3: HETTICH B.             138   F 3:
F 4: HEUBERGER M.           137   F 4:
F 5: HOEGGER W.             137   F 5:
F 6: PASQUON U.             136   F 6:
F 7: ROMER B.               137   F 7:
F 8: SCHACHTLER V.          137   F 8:
F 9: WOLFENSBERGER A.       137   F 9:
F10: P: 2   SUCHEN-NAMEN:         F10:
```

**5d**

```
F 1: ABT J.                 129   F 1:
F 2: BISCHOFBERGER PR       134   F 2:
F 3: CARNUCCIO A.           134   F 3:
F 4: FREI T.                135   F 4:
F 5: GUYER R.               135   F 5:
F 6: MAUCKA C.              130   F 6:
F 7: MODEM                  133   F 7:
F 8: STORZ H.               136   F 8:
F 9: VOGEL W.               125   F 9:
F10: P: 3   SUCHEN-NAMEN:         F10:
```

**5e**

```
F 1: BRODBECK H.            127   F 1:
F 2: EGLE S.                125   F 2:
F 3: HAAS RUEDI             129   F 3:
F 4: MEIER D.               129   F 4:
F 5: PFENNINGER E.          127   F 5:
F 6: SCHICKER P. DR.        125   F 6:
F 7: SCHLOSSHOF             127   F 7:
F 8: SCHNUERIGER            127   F 8:
F 9: WOLF M.                129   F 9:
F10: P: 4   SUCHEN-NAMEN:         F10:
```

**5f**

**FIG. 5**

```
F 1: | KUCERA J.          | F 1:
F 2: | KUENG R.           | F 2:
F 3: | KUENZLE R.         | F 3:
F 4: | KUHN KURT          | F 4:
F 5: | KULL T.            | F 5:
F 6: | KUNZ ELSBETH       | F 6:
F 7: | KUNZ W.            | F 7:
F 8: | KURATLE H.         | F 8:
F 9: | LABOR              | F 9:
F10: | KU                 | F10:
```

__6a__

```
F 1: | KUENG R.           | F 1:
F 2: | 6518               | F 2:
F 3: |                    | F 3:
F 4: |                    | F 4:
F 5: |                    | F 5:
F 6: |                    | F 6:
F 7: |                    | F 7:
F 8: |                    | F 8:
F 9: |                    | F 9:
F10: |         ZURUECK:   | F10:
```

__6b__

```
F 1: | BIRCH U.              112 | F 1:
F 2: | BISCHOFBERGER J.      108 | F 2:
F 3: | GABATHULER J.         113 | F 3:
F 4: | HAEBERLIN H.          109 | F 4:
F 5: | KUENG R.              117 | F 5:
F 6: | MAURER M. (PW)        107 | F 6:
F 7: | RUETTI A.             115 | F 7:
F 8: | SCHANZ W.             111 | F 8:
F 9: | ZOLLINGER W.          120 | F 9:
F10: | P: 6  SUCHEN-NAMEN:       | F10:
```

__6c__

```
F 1: | BISCHOFBERGER PR 134 | F 1:
F 2: | CARNUCCIO A.     134 | F 2:
F 3: | FREI T.          135 | F 3:
F 4: | GUYER R.         135 | F 4:
F 5: | KUENG R.         131 | F 5:
F 6: | MAUCKA C.        130 | F 6:
F 7: | MODEM            133 | F 7:
F 8: | STORZ H.         136 | F 8:
F 9: | VOGEL W.         135 | F 9:
F10: | P: 3  SUCHEN-NAMEN:  | F10:
```

__6d__

```
F 1: | ABT J.               129 | F 1:
F 2: | BRODBECK H.          127 | F 2:
F 3: | EGLE S.              125 | F 3:
F 4: | HAAS RUEDI           129 | F 4:
F 5: | MEIER D.             129 | F 5:
F 6: | PFENNINGER E.        127 | F 6:
F 7: | SCHLOSSHOF           127 | F 7:
F 8: | SCHNUERIGER U.       127 | F 8:
F 9: | WOLF M.              129 | F 9:
F10: | P: 4  SUCHEN-NAMEN:      | F10:
```

__6e__

```
F 1: | APPOLONI P. PRIV 124 | F 1:
F 2: | BUSARELLO R.     121 | F 2:
F 3: | GOLTZ V.         124 | F 3:
F 4: | GOLTZ V. PRIVAT  120 | F 4:
F 5: | HUBER M.         123 | F 5:
F 6: | SCHICKER P. DR.  125 | F 6:
F 7: | STOCKER A.       124 | F 7:
F 8: | ZOLLINGER H.     120 | F 8:
F 9: | ZOLLINGER K.     120 | F 9:
F10: | P: 5  SUCHEN-NAMEN:  | F10:
```

__6f__

__FIG. 6__

```
┌─────────────────────────┐        ┌─────────────────────────┐
│ F 1:              F 1:   │        │ F 1: NAME/VORNAME :  F 1:│
│ F 2:              F 2:   │        │ F 2: NUMMER/DATEN/TEAM : F 2:│
│ F 3:              F 3:   │        │ F 3: PAUSE ":" ZEICHEN"." F 3:│
│ F 4:              F 4:   │        │ F 4: FLASH "!" ZEICHEN"-" F 4:│
│ F 5:              F 5:   │        │ F 5: PRIVAT <JA/NEIN>NEIN F 5:│
│ F 6:              F 6:   │        │ F 6:              F 6:   │
│ F 7:              F 7:   │        │ F 7:              F 7:   │
│ F 8:  NEUER EINTRAG: F 8:│        │ F 8:  EINTRAG LOESCHEN: F 8:│
│ F 9: SUCHEN EINTRAG: F 9:│        │ F 9: UEBERNAHME/ZURUECK: F 9:│
│ F10:      ZURUECK: F10:  │        │ F10:      ZURUECK: F10:  │
└─────────────────────────┘        └─────────────────────────┘
         7a                                  7b
```

```
┌─────────────────────────┐        ┌─────────────────────────┐
│ F 1: HARTMEIER G.   F 1: │        │ F 1: HARTMEIER G.   F 1: │
│ F 2:              F 2:   │        │ F 2: 031 203719     F 2: │
│ F 3: PAUSE ":" ZEICHEN"." F 3:│   │ F 3: PAUSE ":" ZEICHEN"." F 3:│
│ F 4: FLASH "!" ZEICHEN"-" F 4:│   │ F 4: FLASH "!" ZEICHEN"-" F 4:│
│ F 5: PRIVAT <JA/NEIN>NEIN F 5:│   │ F 5: PRIVAT <JA/NEIN>NEIN F 5:│
│ F 6:              F 6:   │        │ F 6:              F 6:   │
│ F 7:              F 7:   │        │ F 7:              F 7:   │
│ F 8:  EINTRAG LOESCHEN: F 8:│     │ F 8:  EINTRAG LOESCHEN: F 8:│
│ F 9: UEBERNAHME/ZURUECK: F 9:│    │ F 9: UEBERNAHME/ZURUECK: F 9:│
│ F10:      ZURUECK: F10:  │        │ F10:      ZURUECK: F10:  │
└─────────────────────────┘        └─────────────────────────┘
         7c                                  7d
```

```
┌─────────────────────────┐        ┌─────────────────────────┐
│ F 1: EDIT_SUCHBEGRIFF F 1:│       │ F 1: MODEM          F 1: │
│ F 2: ABDERHALDEN P. F 2: │        │ F 2: 6922           F 2: │
│ F 3: ABT J.         F 3: │        │ F 3: PAUSE ":" ZEICHEN"." F 3:│
│ F 4: AEPPLI R.      F 4: │        │ F 4: FLASH "!" ZEICHEN"-" F 4:│
│ F 5: AERNE R.       F 5: │        │ F 5: PRIVAT <JA/NEIN>NEIN F 5:│
│ F 6: AESCHBACHER F. F 6: │        │ F 6:              F 6:   │
│ F 7: ALMER R.       F 7: │        │ F 7:              F 7:   │
│ F 8: ALTERMATT A.   F 8: │        │ F 8:  EINTRAG LOESCHEN: F 8:│
│ F 9: ALTWEG V.      F 9: │        │ F 9: UEBERNAHME/ZURUECK: F 9:│
│ F10:      ZURUECK: F10:  │        │ F10:      ZURUECK: F10:  │
└─────────────────────────┘        └─────────────────────────┘
         7e            FIG.7                7f
```

```
F 1: | APPOLONI P.          139 | F 1:
F 2: | BAETSCHMANN P.       138 | F 2:
F 3: | BEELER D.            142 | F 3:
F 4: | DOLEZAL J.           139 | F 4:
F 5: | HARTMANN R. DR.      139 | F 5:
F 6: | KELLER TH.           139 | F 6:
F 7: | KUHN KURT            141 | F 7:
F 8: | MEIENBERG J.         141 | F 8:
F 9: | VALICEK J.           143 | F 9:
F10: | P 1:   SUCHEN-NAMEN:     | F10:
```

**8a**

```
F 1: | HAAS R.                 138 | F 1:
F 2: | HALLER E.               137 | F 2:
F 3: | HETTICH B.              138 | F 3:
F 4: | HEUBERGER M.            137 | F 4:
F 5: | HOEGGER W.              137 | F 5:
F 6: | PASQUON U.              136 | F 6:
F 7: | ROMER B.                137 | F 7:
F 8: | SCHACHTLER V.           137 | F 8:
F 9: | WOLFENSBERGER A.  137 | F 9:
F10: | P: 2   SUCHEN-NAMEN:        | F10:
```

**8b**

```
F 1: | BISCHOFBERGER PR 134 | F 1:
F 2: | CARNUCCIO A.         134 | F 2:
F 3: | FREI T.              135 | F 3:
F 4: | GUYER R.             135 | F 4:
F 5: | HARTMEIER G.         135 | F 5:
F 6: | KUENG R.             131 | F 6:
F 7: | MAUCKA C.            130 | F 7:
F 8: | STORZ H.             136 | F 8:
F 9: | VOGEL W.             135 | F 9:
F10: | P: 3   SUCHEN-NAMEN:     | F10:
```

**8c**

```
F 1: | ABT J.               129 | F 1:
F 2: | BRODBECK H.          127 | F 2:
F 3: | EGLE S.              125 | F 3:
F 4: | HAAS RUEDI           129 | F 4:
F 5: | MEIER D.             129 | F 5:
F 6: | PFENNINGER E.        127 | F 6:
F 7: | SCHLOSSHOF           127 | F 7:
F 8: | SCHNUERIGER U.       127 | F 8:
F 9: | WOLF M.              129 | F 9:
F10: | P: 4   SUCHEN-NAMEN:     | F10:
```

**8d**

```
F 1: | APPOLONI P. PRIV 124 | F 1:
F 2: | BUSARELLO R.        121 | F 2:
F 3: | GOLTZ V.            124 | F 3:
F 4: | GOLTZ V. PRIVAT 120 | F 4:
F 5: | HUBER M.            123 | F 5:
F 6: | SCHICKER P. DR.     125 | F 6:
F 7: | STOCKER A.          124 | F 7:
F 8: | ZOLLINGER H.        120 | F 8:
F 9: | ZOLLINGER K.        120 | F 9:
F10: | P: 5   SUCHEN-NAMEN:     | F10:
```

**8e**

```
F 1: | BIRCH U.              112 | F 1:
F 2: | BISCHOFBERGER J. 108 | F 2:
F 3: | GABATHULER J.       113 | F 3:
F 4: | HAEBERLIN H.         109 | F 4:
F 5: | MAURER M. (PW)      107 | F 5:
F 6: | RUETTI A.            115 | F 6:
F 7: | SCHANZ W.            111 | F 7:
F 8: | ZOLLINGER M.         120 | F 8:
F 9: | ZOLLINGER W.         120 | F 9:
F10: | P: 6   SUCHEN-NAMEN:      | F10:
```

**8f**

**FIG. 8**